Europäisches Patentamt

European Patent Office

Office européen des brevets

(11) Numéro de publication : **0 309 316 B1**

(12) **FASCICULE DE BREVET EUROPEEN**

(45) Date de publication du fascicule du brevet :
**18.12.91 Bulletin 91/51**

(51) Int. Cl.⁵ : **B62D 1/04,** B29C 67/14,
B29C 67/18

(21) Numéro de dépôt : **88402313.6**

(22) Date de dépôt : **14.09.88**

(54) **Procédé pour la fabrication d'un volant de direction allégé.**

(30) Priorité : **25.09.87 FR 8713323**

(43) Date de publication de la demande :
**29.03.89 Bulletin 89/13**

(45) Mention de la délivrance du brevet :
**18.12.91 Bulletin 91/51**

(84) Etats contractants désignés :
**DE ES GB IT SE**

(56) Documents cités :
**EP-A- 0 022 679**
**EP-A- 0 139 015**
**EP-A- 0 173 826**
**AU-A- 532 845**

(56) Documents cités :
**DE-A- 3 425 959**
**FR-A- 2 513 563**
**FR-A- 2 518 479**
**GB-A- 1 582 846**

(73) Titulaire : **ECIA - EQUIPEMENTS ET**
**COMPOSANTS POUR L'INDUSTRIE**
**AUTOMOBILE**
**F-25400 Audincourt (Doubs) (FR)**

(72) Inventeur : **Henigue, Christian**
**6 Rue des Vosges Suarce**
**F-90000 Delle (FR)**

(74) Mandataire : **Mestre, Jean et al**
**c/o CABINET LAVOIX 2, place d'Estienne**
**d'Orves**
**F-75441 Paris Cédex 09 (FR)**

## Description

L'invention concerne les volants de direction notamment pour véhicules automobiles et, plus particulièrement, a pour objets un procédé de Fabrication d'un volant allégé de direction à partir d'une matière synthétique renforcée estampable et un volant obtenu par un tel procédé.

Les volants de direction notamment d'automobiles doivent satisfaire à des exigences contradictoires.

Par exemple, ils doivent être relativement légers afin d'avoir une masse réduite et un petit moment d'inertie par rapport à l'axe de la colonne de direction pour des raisons notamment de confort. La petite masse fait que lorsque le véhicule circule à grande vitesse ou sur des voies en mauvais état, le volant ne vibre pas. Le petit moment d'inertie facilite les braquages de manoeuvre et les changements de direction lorsque le véhicule est utilisé.

En outre, pour des raisons de sécurité il faut que le volant soit apte à supporter des déformations importantes résultant d'efforts en cas de choc violent notamment frontal. En particulier, si le thorax du conducteur vient à rencontrer le volant il ne faut pas que celui-ci occasionne des blessures par contusion ou provoque des plaies par coupure ou perforation.

On voit donc qu'il n'est pas aisé de fabriquer un volant d'automobile qui satifasse à toutes ces contraintes et qui soit aussi d'un coût de revient relativement modique.

En plus de ces contraintes techniques il y a lieu d'ajouter des impératifs d'ordre esthétique car le volant doit être d'un aspect chatoyant à l'oeil et d'un contact agréable au toucher.

Selon la technique antérieure, on a déjà proposé diverses solutions pour construire des volants qui satisfont à la plupart de ces exigences.

Un volant comprend, essentiellement, un moyeu central et une jante périphérique qui sont reliés l'un à l'autre par au moins un bras ou une branche approximativement radial.

La plupart du temps de tels volants outre le moyeu qui est généralement en métal comprennent d'autres composants métalliques. La tendance actuelle consiste à utiliser un tel moyeu métallique et à lui associer des jante et branches à armatures ou renforts métalliques afin de satisfaire à la fois aux contraintes mécaniques et de sécurité.

Comme exposé dans la demande de brevet français 2518479, on utilise un moyeu métallique auquel sont associées des branches et une jante obtenues par une technique de moulage à double injection au cours de laquelle on fabrique d'abord la partie extérieure en matière plastique qui sert d'enveloppe dans laquelle est injectée ensuite une autre manière plastique chargée qui sert de noyau.

Selon une autre technique qui fait l'objet de la demande de brevet européen 0139015 on fabrique un volant à moyeu et branches métalliques auxquels on associe une jante faite de matière plastique chargée de fibres continues.

Selon une autre technique décrite à la demande de brevet européen 0173826 on utilise pour les branches et la jante des fibres longues continues noyées dans une résine que l'on bobine et auxquelles on associe des manchons métalliques fendus qui permettent un enroulement approprié des fibres tout en évitant le clivage de leurs différentes nappes dans les zones où elles divergent.

Une autre technique est aussi décrite dans le document GB-A-1582846 sur lequel est basé le préambule de la revendication 1. Selon ce document, pour fabriquer un volant on utilise un renfort fait d'un empilage de feuilles qui sont faites en une résine de polyester contenant des fibres de verre orientées et qui sont au préalable découpées à la configuration du volant à obtenir avec un moyeu central, une jante périphérique et au moins une branche approximativement radiale les reliant. Ces feuilles sont empilées dans un moule où elles sont soumises a l'action de la chaleur et d'une pression afin que la résine prenne pour constituer le renfort qui est soumis par la suite à d'autres opérations avant d'aboutir finalement à la confection d'un volant.

Comme on le voit aucune de ces techniques ne fait appel pour la confection d'un volant de direction notamment d'automobile à seulement de la matière plastique renforcée de fibres pour l'obtention de la jante et/ou des branches.

Le but de l'invention est de fabriquer un volant allégé de direction, notamment pour véhicule automobile, dont la seule pièce métallique est son moyeu afin de satisfaire à toutes les contraintes habituelles.

Dans le présent texte on désigne par "volant" la partie interne de ce dernier qui a un rôle "mécanique" à l'exclusion de tout revêtement extérieur ultérieur qui lui confère son aspect final agréable à la vue et au toucher.

L'invention a pour objet un procédé de fabrication d'un volant allégé de direction notamment pour véhicule automobile du type indiqué dans le préambule de la revendication et dont les particularités ressortent notamment de la partie caractérisante de celle-ci.

L'invention a aussi pour objet le volant obtenu par la mise en oeuvre de ce procédé.

Pour ce faire selon l'invention, on utilise un demi produit constitué d'une matière synthétique et de fibres dont le pourcentage relatif en masse est très important par rapport à la matière synthétique qui les enrobe de manière à pouvoir être facilement manipulé tel quel sous forme de flan. On utilise ce demi produit après réchauffage éventuel des flans pour garnir un moule fait d'un poinçon et d'une matrice avec une empreinte de l'objet à obtenir de manière à l'y comprimer avec une énergie et une vitesse qui lui permettent de se conformer par estampage sans cassure des fibres longues ou continues constitutives. De préférence on utilise des flans multiples de demi produit de même nature ou non de manière à obtenir une orientation et une densité des fibres qui satisfassent aux contraintes mécaniques et de sécurité.

Grâce à l'invention il est possible d'obtenir un volant convenable en une seule opération dont la seule partie métallique est le moyeu.

D'autres caractéristiques de l'invention ressortiront de la lecture de la description et des revendications qui suivent et de l'examen du dessin annexé, donné seulement à titre d'exemple où :

    — la Fig. 1 est une section radiale schématique partielle d'un mode de réalisation de l'invention illustré sur la Fig. 2 ;

    — la Fig. 2 est une vue de dessus schématique de la matrice chargée de la Fig. 1 ;

    — les Fig. 3A, 38 et 3C sont des coupes longitudinales de modes de réalisation d'un volant suivant l'invention ; et

    — la Fig. 4 est une vue de dessous d'un volant selon l'invention.

Les volants pour véhicules automobiles étant bien connus dans la technique, on ne décrira que ce qui concerne l'invention. Pour le reste le spécialiste de la technique considérée puisera dans les solutions à sa disposition pour faire face aux contraintes qui lui sont opposées tout en atteignant les objectifs qui lui sont assignés.

Les matières synthétiques chargées de fibres mono-filament ou multi-brins, retordus ou non et éventuellement assemblées en torons, qui sont orientées ou tissées, sont bien connues.

Il existe des matières synthétiques thermo-durcissables ou thermoplastiques préimprégnées de ce type. Toutefois, il est difficile de les utiliser suivant la technique antérieure pour obtenir des volants qui soient satisfaisants. En particulier, il faut alors se servir de matières plastiques très résistantes et qui sont souvent coûteuses car très spécifiques ou bien il faut les mettre en oeuvre en très grande quantité ce qui ne fait qu'augmenter outre le prix, la masse et le moment d'inertie polaire c'est-à-dire par rapport à l'axe de la colonne de direction.

Le but de l'invention est de faire face à ce type de difficultés en utilisant un demi produit obtenu à partir d'une matière synthétique dans laquelle sont incorporées des fibres relativement longues qui jouent le rôle de charge.

Cette matière est utilisée sous forme de flans et lorsqu'on indique dans le présent texte qu'il s'agit de fibres relativement longues il faut entendre des fibres qui ne sont pas interrompues dans le flan mis en oeuvre. De telles fibres peuvent être monofilament ou multi-brins, retordues ou non et assemblées en torons ou câblées. Ces fibres peuvent être orientées ou tissées.

Les flans dont il est question par la suite sont faits d'une matière synthétique thermoplastique tel que du polypropylène, un polyamide ou d'une matière synthétique thermodurcissable préimprégnée désignée dans la technique sous l'appellation SMC (semi moulding composite).

Les fibres qui sont incorporées à cette matière synthétique sont par exemple des fibres organiques telles que celles connues dans le commerce sous l'appellation Kevlar, des fibres minérales telles que du verre ou du carbone ou bien même des fibres métalliques.

De tels flans de demi produit sont, de préférence, obtenus par co-extrusion c'est-à-dire par extrusion simultanée de la matière synthétique et des fibres afin d'obtenir une bonne orientation sans désordre de celle-ci dans les flans de demi produit pour les raisons qui apparaîtront par la suite.

Comme on le voit sur les figures du dessin, un volant 10 comprend un moyeu central 11, une jante périphérique 12 et au moins un bras ou branche 13 approximativement radial reliant le moyeu à la jante.

Le moyeu 11 destiné à relier le volant à l'extrémité libre de l'habitacle de l'arbre de colonne de direction, est métallique comme classique.

Pour fabriquer un volant selon l'invention, on utilise un moule 30 composé d'un poinçoin 31 et d'une matrice 32. Dans ce moule est ménagée une empreinte 320 qui correspond à la configuration et à la géométrie du volant 10 à obtenir.

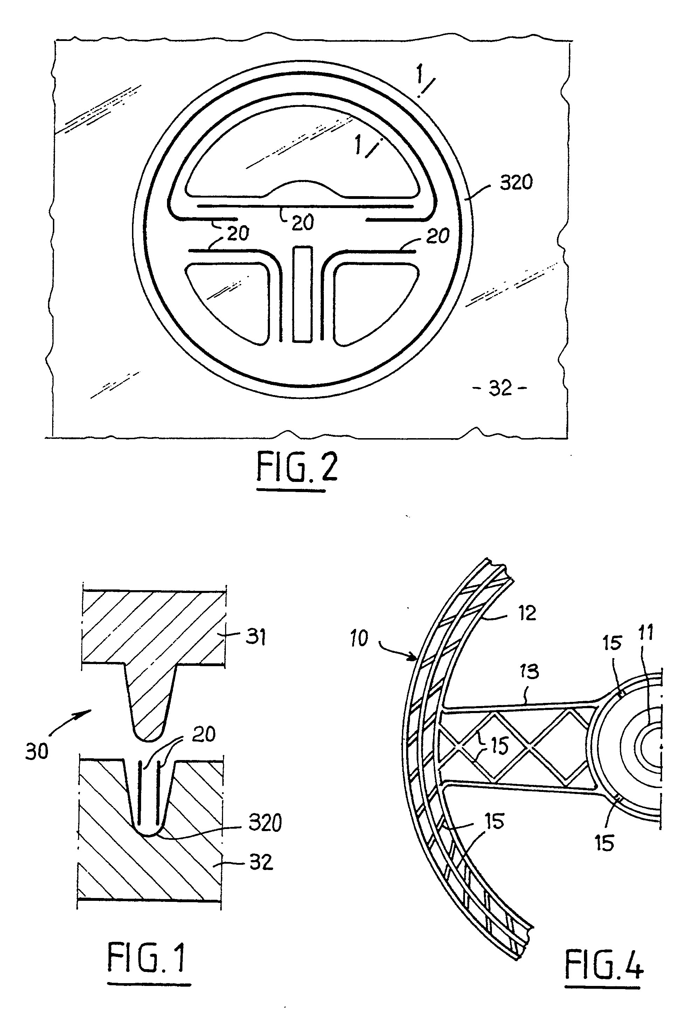

Comme on le voit, en particulier sur les Fig. 1 et 2, on garnit l'empreinte 320 du moule de flans 20 de demi produit selon l'invention. On conforme les différents flans à la géométrie du moule et on les dispose comme par exemple représenté sur la Fig. 2. On peut utiliser des flans de nature identique ou de nature différente par leur matière synthétique et/ou leurs fibres et de dimensions identiques ou différentes dans leurs différentes directions, comme illustré.

Selon l'invention on utilise des flans multiples placés sur chant dans l'empreinte de telle sorte que les fibres garnissent parfaitement les détails, par exemple des nervures présentes dans l'empreinte.

Ceci permet de réaliser notamment les ajourages et en même temps de combiner l'orientation, la nature et la densité des fibres pour optimiser la résistance locale aux efforts.

Comme on le voit en examinant les figures, grâce à la technique de l'invention il est possible d'obtenir le volant directement avec ajours contrairement à ce qui est fait selon la technique antérieure où l'on part non pas de flans mais de feuilles en matière plastique estampable qui sont préalablement ramollies puis estampées et où il est nécessaire de faire les ajours après le moulage.

Comme on l'observe, selon l'invention on obtient directement les ajours par la disposition et la répartition des flans dans l'empreinte.

Les flans ainsi chargés dans le moule, préalablement ramollis s'il y a lieu, sont alors soumis à un estampage c'est-à-dire qu'ils sont comprimés avec une énergie suffisante et une grande vitesse.

On constate alors que la matière synthétique à tendance à fluer, voire à se liquéfier et que les fibres suivent l'écoulement de la matière synthétique au cours de l'estampage pour emplir les détails de l'empreinte, la matière synthétique jouant le rôle d'un liant analogue à un mastic.

Les paramètres de réglage du processus tiennent compte notamment de la rhéologie propre à la matière synthétique, en particulier de sa viscosité par rapport à la vitesse de choc au moment de l'estampage.

Grâce à l'invention il est possible d'obtenir des nervures, des bords tombés, des arrondis sur le volant.

Le choix de la forme du moule, des énergies et des vitesses d'estampage, est fonction des équipements à la disposition de l'opérateur, des dimensions des pièces à obtenir et de leur géométrie ainsi que de la nature des matières synthétiques et des fibres utilisées.

Grâce à l'invention, il est possible d'obtenir un volant où le moyeu métallique est directement prisonnier.

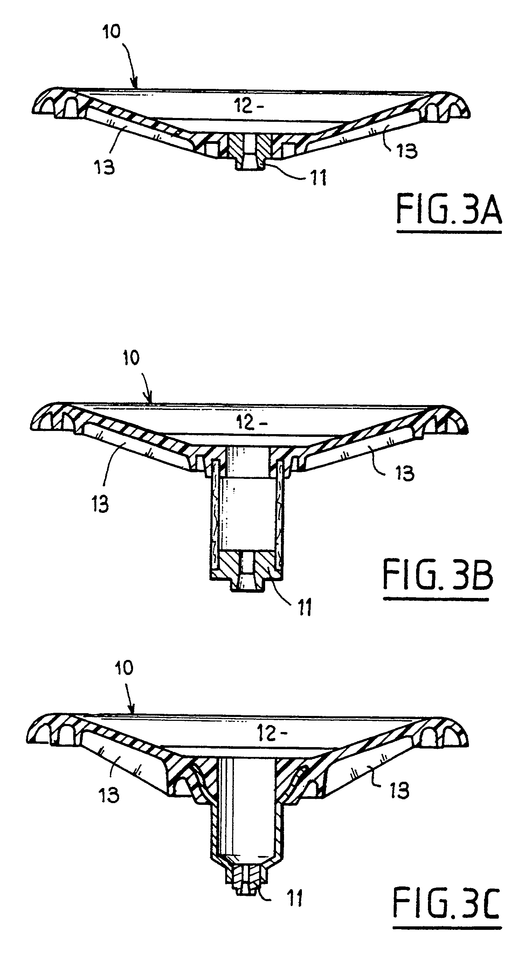

C'est ce qui est représenté sur la Fig. 3A.

Au lieu d'utiliser un moyeu simple traditionnel il est aussi possible de se servir d'un moyeu associé à un absorbeur d'énergie qui permet encore d'augmenter les conditions de sécurité.

Sur la Fig. 3B, est illustré un volant selon l'invention équipé d'un absorbeur de choc tel que celui qui fait l'objet de la demande de brevet de la Demanderesse intitulée "Volant de direction notamment de véhicule automobile" déposée le 17 avril 1987. On peut remplacer un tel absorbeur d'énergie composite par un absorbeur d'énergie métallique comme illustré sur la Fig. 3C.

Sur la Fig. 4 qui représente schématiquement un volant selon l'invention, vu de dessous, on observe le réseau de nervures 15 circulaires, obliques, radiales ou croisées que l'on obtient. Ces nervures renforcées par des fibres longues permettent d'allier résistance et légèreté.

On voit donc tout l'intérêt de l'invention qui permet d'obtenir en une seule opération un volant totalement en matière synthétique renforcée de fibres longues sans faire appel à des renforts métalliques intérieurs ou extérieurs et où la seule partie métallique est, éventuellement, son moyeu.

Comme il est courant, le volant suivant l'invention est muni extérieurement d'un revêtement qui lui donne son aspect et son toucher final. Ce revêtement, par exemple en une mousse de polyuréthane, est appliqué de toute manière appropriée classique. Un tel revêtement peut jouer le rôle de "peau" ou bien être recouvert lui-même d'un habillage en cuir naturel ou en synderme.

## Revendications

1. Procédé de fabrication d'un volant allégé de direction notamment pour véhicule automobile constitué, entre autres, d'un moyeu central, d'une jante périphérique et d'au moins une branche approximativement radiale reliant moyeu et jante, où ce moyeu est la seule pièce métallique, à l'aide d'un moule (30) ayant un poinçon (31) et une matrice (32) où est ménagée une empreinte (320) du volant à obtenir, caractérisé en ce qu'on garnit au moins partiellement l'empreinte (320) d'au moins un flan (20) longiligne fait d'au moins une matière synthétique chargée de fibres longues dont le pourcentage relatif en masse est important par rapport à la matière synthétique, en ce qu'on place les flans (20) sur chant et en ce qu'on met en forme ces flans par estampage en une seule opération.

2. Procédé selon la revendication 1, caractérisé en ce qu'on réchauffe les flans (20) avant estampage.

3. Procédé selon l'une quelconque des revendications 1 et 2, caractérisé en ce qu'on utilise une matière synthétique thermoplastique.

4. Procédé selon l'une quelconque des revendications précédentes, caractérisé en ce qu'on utilise une matière synthétique thermodurcissable.

5. Procédé selon l'une quelconque des revendications précédentes, caractérisé en ce qu'on utilise des fibres minérales, organiques et/ou métalliques.

6. Procédé selon l'une quelconque des revendications précédentes, caractérisé en ce qu'on utilise des fibres monofilaments ou multi-brins.

7. Procédé selon l'une quelconque des revendications précédentes, caractérisé en ce qu'on utilise des fibres retordues, câblées, orientées et/ou tissées.

8. Volant obtenu par le procédé exposé dans l'une quelconque des revendications précédentes.

## Patentansprüche

1. Verfahren zum Herstellen eines gewichtsreduzierten Lenkrades, insbesondere für Kraftfahrzeuge, das, unter anderem, aus einer Mittelnabe, einem Umfangskranz und wenigstens einer näherungsweise radial verlaufenden Strebe, welche Nabe und Kranz verbindet, aufgebaut ist, wobei die Nabe das einzige metallische Teil ist, mit Hilfe einer Form (30) aus einem Stempel (31) und einer Matrix (32), in der ein Abdruck (320) des herzustellenden Lenkrades eingebracht ist, dadurch gekennzeichnet, daß der Abdruck (320) wenigstens teilweise mit wenigstens einem langgestreckten Zuschnitt (20) versehen ist, der wenigstens teilweise aus einem mit langen Fasern verstärkten Kunststoffmaterial hergestellt ist, wobei der Prozentanteil, bezogen auf die Masse, in bezug auf das Kunststoffmaterial beträchtlich ist, daß die Zuschnitte (20) an den Schmalseiten aneinanderlegt werden und daß die Zuschnitte durch Pressen in einem einzigen Arbeitsgangs geformt werden.

2. Verfahren nach Anspruch 1, dadurch gekennzeichnet, daß die Zuschnitte (20) vor dem Pressen vorgewärmt werden.

3. Verfahren nach Anspruch 1 oder 2, dadurch gekennzeichnet, daß thermoplastisches Kunststoffmaterial verwendet wird.

4. Verfahren nach einem der vorangehenden Ansprüche, dadurch gekennzeichnet, daß ein wärmeaushärtendes Kunststoffmaterial verwendet wird.

5. Verfahren nach einem der vorangehenden Ansprüche, dadurch Gekennzeichnet, daß mineralische, organische und/oder metallische Fasern verwendet werden.

6. Verfahren nach einem der vorangehenden Ansprüche, dadurch gekennzeichnet, daß monofile oder mehrfasrige Fasern verwendet werden.

7. Verfahren nach einem der vorangehenden Ansprüche, dadurch gekennzeichnet, daß gezwirnte, verdrillte, ausgerichtete und/oder gewebte Fasern verwendet werden.

8. Lenkrad, hergestellt durch das Verfahren nach einem der vorangehenden Ansprüche.

## Claims

1. Process for manufacturing a lighter steering wheel, in particular for an automobile vehicle, comprised, inter alia, of a central hub, a peripheral rim, and at least one strut which is approximately radial and connects the hub and the rim, wherein this hub is the only-metal component, using a mould (30) with a punch (31) and a die (32) wherein there is provided an imprint (320) of the steering wheel to be produced, characterised in that the imprint (320) is at least partially provided with at least one linear blank (20) consisting of at least one synthetic material charged with long fibres of which the relative percentage by mass is significant with regard to the synthetic material in that the blanks (20) are placed on edge and in that they are formed by stamping in a single process.

2. Process according to claim 1, characterised in that the blanks (20) are heated prior to stamping.

3. Process according to any one of claims 1 and 2, characterised in that a thermoplastics synthetic material is used.

4. Process according to any one of the preceding claims, characterised in that a thermosetting synthetic material is used.

5. Process according to any one of the preceding claims, characterised in that mineral, organic and/or metal fibres are used.

6. Process according to any one of the preceding claims, characterised in that monofilament or multistrand fibres are used.

7. Process according to any one of the preceding claims, characterised in that twisted, cabled, oriented and/or woven fibres are used.

8. Steering wheel produced by the process disclosed in any of the preceding claims.

FIG.2

FIG.1

FIG.4

FIG.3A

FIG.3B

FIG.3C